# EUROPEAN PATENT SPECIFICATION

(11) **EP 4 711 610 B1**
(45) Date of publication and mention of the grant of the patent: **09.09.2026**
(21) Application number: 24213927.7
(22) Date of filing: 19.11.2024
(51) Int. Cl.: F03G 7/08, F03G 3/06, F03B 13/20, F03D 5/06

(54) **SWING TYPE POWER GENERATION DEVICE**
STROMERZEUGUNGSVORRICHTUNG VOM SCHWUNGTYP
DISPOSITIF DE PRODUCTION D'ÉNERGIE DE TYPE OSCILLANT

(30) Priority: 12.09.2024 CN 202411276348
(43) Date of publication of application: 18.03.2026
(73) Proprietor: Shijiazhuang Jianmu Feed Co., Ltd., Shijiazhuang, Hebei (CN)
(72) Inventor: Wei, Zijie, Shijiazhuang, Hebei (CN); Zhao, Qiqi, Shijiazhuang, Hebei (CN); Wei, Lulu, Shijiazhuang, Hebei (CN); Wei, Xiuguang, Shijiazhuang, Hebei (CN)
(74) Representative: Cabinet Chaillot

(56) References cited:
- WO-A1-2016/163631
- CN-A- 110 725 781
- DE-A1- 4 022 254
- US-A- 4 266 143
- US-A1- 2024 200 540

## Description

### TECHNICAL FIELD

The invention relates to the technical field of power generation devices, and in particular to a swing type power generation device.

### BACKGROUND ART

Thermal power generation uses the heat generated by burning fossil fuels (such as coal, natural gas or oil) to heat water, generate steam, and then drive turbines to generate electricity. It is a mature and widely used power generation method with advantages such as mature technology, large power generation and relatively low cost. However, thermal power generation will increase greenhouse gas emissions and release more air pollutants, which will have a greater impact on environmental pollution and climate warming. Therefore, people are paying more and more attention to the development of clean energy.

Wave power generation uses the kinetic energy of waves and converts it into electrical energy through special mechanical devices or hydraulic systems. Wave power generation has the advantages of high energy density and strong predictability. However, wave power generation technology is still in the development stage and faces technical challenges, high costs and environmental adaptability issues, which require further research and development and optimization.

US 2024/200540 A1 discloses a seesaw-type hydroelectric power generation device.

### SUMMARY OF THE INVENTION

The purpose of the invention is to overcome the above problems and provide a swing type power generation device. To achieve the above purpose, the invention adopts the following technical solutions:
a swing type power generation device, comprising a workbench, power generation components, and support components;
the workbench is provided with an accommodating cavity inside, and the accommodating cavity is provided with a liquid for increasing the swing frequency and swing amplitude of the workbench, and the liquid does not fill the accommodating cavity and can swing freely in the accommodating cavity;
the power generation component comprises a rotating component, a transmission component, and a generator; the rotating component comprises a transmission rod, a connecting rod, a pendulum, and a slideway; the slideway is circular, and the transmission rod is arranged at a center of the circular slideway; two ends of the connecting rod are fixedly connected to the transmission rod and the pendulum respectively; the pendulum rotates along the slideway under the action of an external power source and drives the transmission rod to rotate, and the transmission rod drives the generator to generate electricity through the transmission component;
the support component comprises a support seat and a spring; two ends of the spring are fixedly connected to a top of the support seat and a bottom of the workbench respectively; the number of the support components is one or more.

As an improvement, the transmission component is a gearbox; the gearbox is provided with an input shaft and an output shaft, which are perpendicular to each other; the output shaft is arranged parallel to the working surface of the workbench, and the output shaft is linearly connected to a rotor shaft of the generator.

As an improvement, a rotor shaft of the generator is linearly connected to the output shaft of the gearbox through a coupling.

As an improvement, the liquid occupies 40-70% of the volume of the accommodating cavity.

As an improvement, a center of a top of the workbench is provided with a mast and sail, and the mast and sail is fixed on the workbench through a support frame.

As an improvement, the workbench adopts a polygonal design; the number of the power generation components is multiple and symmetrically distributed on a top surface and side surfaces of the workbench

As an improvement, the support components are arranged in a circular array at the bottom of the workbench.

As an improvement, a bottom of the pendulum is provided with a pulley matching the slideway, and the pendulum slides along the slideway via the pulley.

The advantages of the invention are:
1. The invention is developed based on the wave power generation device. The waves can drive the workbench to tilt and swing, so that the pendulum slides along the slideway, and then the generated torque is transmitted to the gearbox and the generator in sequence through the transmission rod, driving the generator to generate electricity. The invention also provides a spring at the bottom of the workbench, and an accommodating cavity for storing liquid is provided inside the workbench. The arrangement of the spring and the accommodating cavity can further increase the instability of the workbench, increase the swing amplitude and swing frequency of the workbench when it swings, and make the workbench produce continuous swinging under the action of external force, so that the pendulum can continue to slide along the slideway, thereby achieving the purpose of continuous and efficient power generation.
2. The invention provides a mast and sail that can utilize wind energy on the device, which can further increase the swing frequency and swing amplitude of the workbench driven by wind energy, thereby improving the energy efficiency of power generation. At the same time, since the invention introduces wind energy as an external energy source, the application scenario of the invention is more extensive, and it can be used not only on the sea surface, but also on sites with sufficient wind energy and vibration energy.
3. 3. The power generation devices of the invention are all modularized, which not only ensures product quality and increases power generation, but also has the advantages of being easy to replace and maintain. The connection and coordination between the various components of the invention are simple, which not only facilitates maintenance and replacement, but also helps to reduce long-term operating costs. In addition, the versatility and scalability of the device enable it to be adjusted according to different power generation needs and environmental conditions, further improving its economic benefits.
4. The invention can comprehensively utilize five natural external forces, namely wind force, wave force, gravity, spring elastic force, and liquid surge force, to achieve multi-source energy acquisition and efficient conversion. Therefore, this solution not only improves the adaptability and stability of the device under different environmental conditions, but also can capture energy to the maximum extent under the action of various natural forces, so that the device has extremely strong environmental compatibility and energy utilization efficiency, providing a new solution for the sustainable use of clean energy.

### BRIEF DESCRIPTION OF THE DRAWINGS

FIG. 1 is a structural diagram of the swing type power generation device in Embodiment 1 according to the invention.
FIG. 2 is a diagram showing the internal structure of the workbench in the swing type power generation device in Embodiment 1 according to the invention.
FIG. 3 is a structural diagram of the rotating component in the swing type power generation device in Embodiment 1 according to the invention.
FIG. 4 is a structural diagram of the transmission component in the swing type power generation device in Embodiment 1 according to the invention.

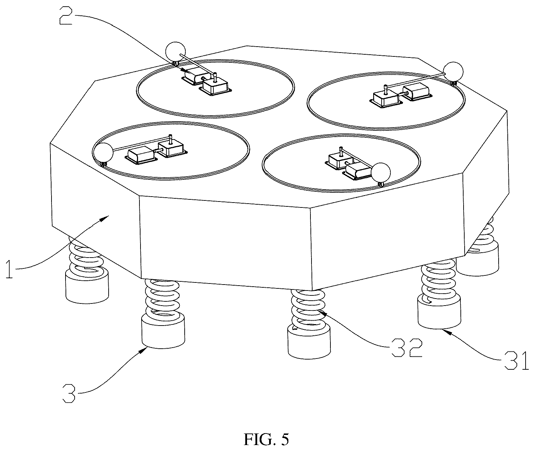

FIG. 5 is a structural diagram of the support component in the swing type power generation device in Embodiment 1 according to the invention.

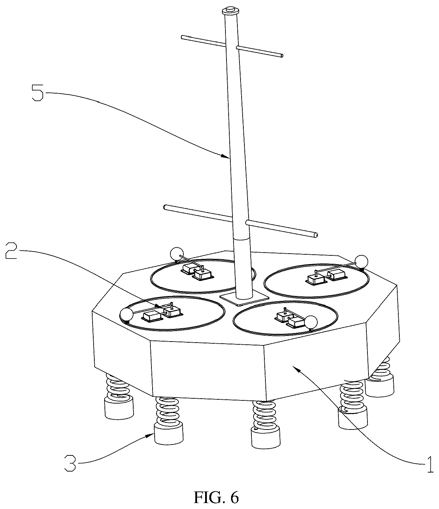

FIG. 6 is a structural diagram of the swing type power generation device in Embodiment 2 according to the invention.

### In the figures:

1 refers to the workbench; 11 refers to the accommodating cavity; 2 refers to the power generation component; 21 refers to the rotating component; 211 refers to the transmission rod; 212 refers to the connecting rod; 213 refers to the pendulum; 214 refers to the slideway; 215 refers to the pulley; 22 refers to the transmission component; 221 refers to the gearbox; 222 refers to the input shaft; 223 refers to the output shaft; 224 refers to the coupling; 23 refers to the generator; 3 refers to the support component; 31 refers to the support seat; 32 refers to the spring; 4 refers to the liquid; 5 refers to the mast and sail; 6 refers to the support frame.

### SPECIFIC EMBODIMENT OF THE INVENTION

The invention will be described in detail and specifically by specific embodiments hereinafter to provide a better understanding of the invention, but the following embodiments do not limit the protection scope of the invention.

### Embodiment 1

The embodiment discloses a swing type power generation device, comprising a workbench 1, power generation components 2, and support components 3.

The workbench 1 adopts an octagonal structure. The workbench 1 is provided with an accommodating cavity 11 inside, and the accommodating cavity 11 is provided with a liquid 4 for increasing the swing frequency and swing amplitude of the workbench. In the embodiment, the liquid 4 is water; the liquid 4 occupies 60% of the volume of the accommodating cavity 11, and the liquid 4 does not fill the accommodating cavity 11 and can swing freely in the accommodating cavity 11.

The power generation component 2 comprises a rotating component 21, a transmission component 22, and a generator 23. The rotating component 21 comprises a transmission rod 211, a connecting rod 212, a pendulum 213, and a slideway 214; the transmission rod 211 is arranged at a center of the slideway 214; two ends of the connecting rod 212 are fixedly connected to the transmission rod 211 and the pendulum 213 respectively. The slideway 214 is a circular slideway with the transmission rod 211 as the center.

When the workbench 1 tilts and swings under the action of external force, the pendulum 213 rotates along the slideway 214 under the action of gravity and drives the transmission rod 211 to rotate. The transmission rod 211 rotates and drives the generator 23 to generate electricity through the transmission component 22. A bottom of the pendulum 213 is provided with a pulley 215 matching the slideway 214, and the pendulum 213 slides along the slideway 214 via the pulley 215. The main function of the slideway 214 is to support and fix. It can support the pendulum 213 and restrict the pendulum 213 on the slideway 214 to avoid derailment during operation. The pulley 215 can reduce the friction force when the pendulum 213 rotates, thereby improving the energy conversion efficiency.

The transmission component 22 is a gearbox 221; the gearbox 221 is provided with an input shaft 222 and an output shaft 223, which are perpendicular to each other. An end of the input shaft 222 is fixedly connected to the transmission rod 211 and keeps rotating synchronously, and the output shaft 223 is parallel to the working surface of the workbench 1.

The generator 23 is arranged on the workbench1. The output shaft 223 is linearly connected to a rotor shaft 231 of the generator 23 via a coupling 224.

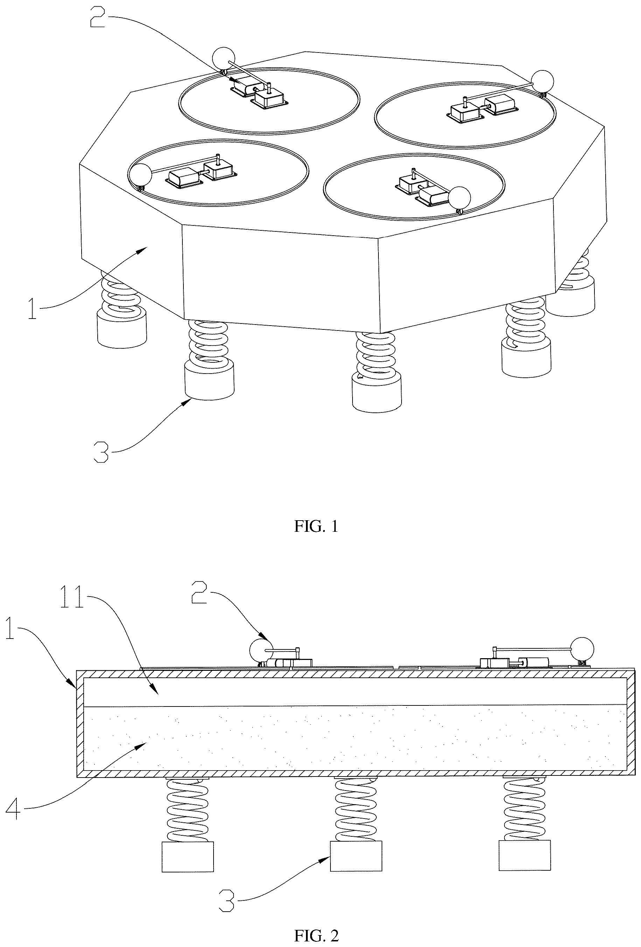

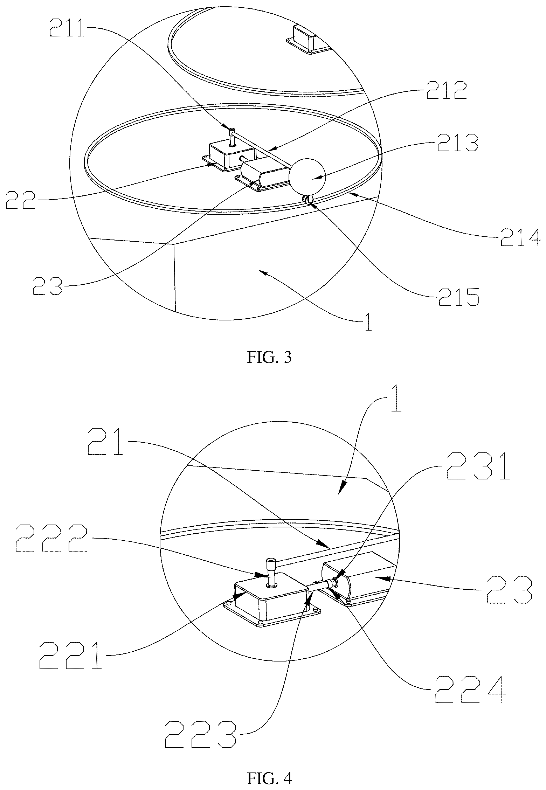

As shown in FIGS. 1 and 3, the generator 23 and the transmission component 22 are arranged in the area surrounded by the slideway 214. The connecting rod 212 is arranged above the generator 23 and the transmission component 22, and the pendulum 213 passes around the outside of the generator 23 and the transmission component 22 when swinging or rotating. The above structure can simplify the connection between the generator 23 and the gearbox 221 and the workbench 1, making it more stable and reliable. The above design can effectively increase the length of the connecting rod 212, increase the torque of the pendulum 213 during movement, and improve the power generation effect. At the same time, the above structure can optimize the space utilization on the workbench 1 and make the distribution of working components on the workbench 1 more reasonable.

The support component 3 comprises a support seat 31 and a spring 32; two ends of the spring 32 are fixedly connected to a top of the support seat 31 and a bottom of the workbench 1 respectively; the number of the support components 3 is one or more. In this embodiment, the number of support components 3 is 8, which are evenly distributed at the bottom of the workbench 1.

When working, this embodiment can be fixed on the hull through the support seat 31. When the hull tilts and swings under the action of the waves, the workbench 1 can be driven to tilt and swing. The pendulum 213 rotates along the slideway 214 under the action of gravity and drives the input shaft 222 to rotate, and then drives the rotor of the generator 23 to rotate through the gearbox 221 to generate electricity.

In this embodiment, a plurality of springs 32 are provided at the bottom of the workbench 1, and an accommodating cavity 11 for storing the liquid 4 is provided inside. The setting of the spring 32 and the accommodating cavity 11 can further increase the instability of the workbench 1, increase the swing amplitude and swing frequency of the workbench, and make the workbench 1 continue to swing under the action of external force, so that the pendulum 213 can continue to slide along the slideway 214, thereby achieving the purpose of continuous and efficient power generation.

### Embodiment 2

The embodiment discloses a swing type power generation device.

In the embodiment, a center of a top of the workbench 1 is provided with a mast and sail 5, and the mast and sail is fixed on the workbench 1 through a support frame 6.

The other structures of this embodiment are the same as those of Embodiment 1.

In the embodiment, a mast and sail 5 is added on the basis of Embodiment 1, which increases the acquisition of external energy, further utilizes wind energy to improve the swing effect of the workbench 1, and increases its swing amplitude and swing frequency. On the sea surface, the sea waves and wind energy can be comprehensively utilized to improve the power generation efficiency.

At the same time, since the embodiment can swing with the help of wind energy, the application scenario of the embodiment is more extensive. It can be used not only on the sea surface, but also on the site with sufficient wind energy and vibration energy.

The electric power generated by the device of the invention can be transmitted to a storage battery through a rectifying device or transmitted to the outside through a transmission line.

Traditional wave energy power generation devices mainly include pendulum wave power generation systems and buoyancy pendulum wave energy power generation devices.

The pendulum wave power generation system uses the pendulum to absorb wave energy and convert it into mechanical energy, and drives the power generation device through the rotation of the pendulum. The device has a simple structure, is easy to maintain and repair, and is suitable for a variety of marine environments.

The buoyancy pendulum wave energy power generation device uses the direct action of waves on the buoyancy pendulum to convert the up and down movement of the waves into mechanical energy of the buoyancy pendulum and then into electrical energy. The device can include a three-level or four-level energy conversion process, which increases the controllability and stability of energy conversion.

Traditional wind power generation devices usually have large impellers. The impellers require abundant and stable wind energy resources to drive them, and have high requirements for the site selection of power generation sites. In addition, traditional wind power generation devices occupy a large area, which is not conducive to deployment in cities or areas with limited space. In addition, the manufacturing, transportation and maintenance costs of large impellers are relatively high, and they also have certain visual and noise impacts on the environment.

Compared with traditional wave power or wind power generation devices, this solution has the following technical advantages:
1. The invention can comprehensively utilize multiple energy sources, including wave energy, wind energy, gravitational potential energy, spring elastic potential energy, and liquid surge energy, etc., which can comprehensively improve the energy capture efficiency, improve the power generation efficiency, and at the same time improve the applicability of the device so that it can be used in a variety of work scenarios.
2. The invention is provided with a mechanism for enhancing the swing, and through the design of the internal liquid and the spring, the swing amplitude and frequency of the workbench are increased, thereby achieving the purpose of increasing the swing frequency and swing amplitude of the pendulum, and further improving the power generation efficiency.
3. The invention adopts a modular design, and each component is assembled in a modular manner, which is convenient for maintenance and replacement of components and reduces long-term operating costs.
4. The invention has strong environmental adaptability, can comprehensively utilize a variety of natural forces, and has good power generation capabilities under different environmental conditions.
5. The invention adopts a swinging design, which enables it to swing under the action of various natural forces, thereby capturing energy and achieving the effect of improving energy utilization efficiency.

## Claims

1. A swing type power generation device, comprising a workbench (1), power generation components (2), and support components (3);
the workbench (1) is provided with an accommodating cavity (11) inside, and the accommodating cavity (11) is provided with a liquid (4) for increasing the swing frequency and swing amplitude of the workbench (1), and the liquid (4) does not fill the accommodating cavity (11) and can swing freely in the accommodating cavity (11);
the power generation component (2) comprises a rotating component (21), a transmission component (22), and a generator (23); the rotating component (21) comprises a transmission rod (211), a connecting rod (212), a pendulum (213), and a slideway (214); the slideway (214) is circular, and the transmission rod (211) is arranged at a center of the circular slideway (214); two ends of the connecting rod (212) are fixedly connected to the transmission rod (211) and the pendulum (213) respectively; the pendulum (213) rotates along the slideway (214) under the action of an external power source and drives the transmission rod (211) to rotate, and the transmission rod (211) drives the generator (23) to generate electricity through the transmission component (22);
the support component (3) comprises a support seat (31) and a spring (32); two ends of the spring (32) are fixedly connected to a top of the support seat (31) and a bottom of the workbench (1) respectively; the number of the support components (31) is one or more.

2. The swing type power generation device of Claim 1, wherein the transmission component (22) is a gearbox (221); the gearbox (221) is provided with an input shaft (222) and an output shaft (223), which are perpendicular to each other; the output shaft (223) is arranged parallel to the working surface of the workbench (1), and the output shaft (223) is linearly connected to a rotor shaft (231) of the generator (23).

3. The swing type power generation device of Claim 2, wherein a rotor shaft (231) of the generator (23) is linearly connected to the output shaft (223) of the gearbox (221) through a coupling (224).

4. The swing type power generation device of Claim 1, wherein the liquid (4) occupies 40-70% of the volume of the accommodating cavity (11).

5. The swing type power generation device of Claim 1, wherein a center of a top of the workbench (1) is provided with a mast and sail (5), and the mast and sail (5) is fixed on the workbench (1) through a support frame (6).

6. The swing type power generation device of Claim 4, wherein the workbench (1) adopts a polygonal design; the number of the power generation components (2) is multiple and symmetrically distributed on a top surface and side surfaces of the workbench (1).

7. The swing type power generation device of Claim 1, wherein the support components (3) are arranged in a circular array at the bottom of the workbench (1).

8. The swing type power generation device of Claim 1, wherein a bottom of the pendulum (213) is provided with a pulley (215) matching the slideway (214), and the pendulum (213) slides along the slideway (214) via the pulley (215).

## Patentansprüche

1. - Schwingungstyp-Stromerzeugungsvorrichtung, umfassend einen Arbeitstisch (1), Stromerzeugungskomponenten (2) und Stützelemente (3);
wobei der Arbeitstisch (1) mit einer Aufnahmekavität (11) im Inneren versehen ist, und die Aufnahmekavität (11) mit einer Flüssigkeit (4) versehen ist, um die Schwingungsfrequenz und Schwingungsamplitude des Arbeitstischs (1) zu erhöhen, und die Flüssigkeit (4) die Aufnahmekavität (11) nicht vollständig ausfüllt und frei in der Aufnahmekavität (11) schwingen kann;
wobei die Stromerzeugungskomponente (2) eine drehende Komponente (21), eine Übertragungskomponente (22) und einen Generator (23) umfasst; die drehende Komponente (21) eine Übertragungsstange (211), eine Verbindungsstange (212), ein Pendel (213) und eine Gleitbahn (214) umfasst; die Gleitbahn (214) kreisförmig ist und die Übertragungsstange (211) in der Mitte der kreisförmigen Gleitbahn (214) angeordnet ist; zwei Enden der Verbindungsstange (212) jeweils fest mit der Übertragungsstange (211) und dem Pendel (213) verbunden sind; das Pendel (213) unter Einwirkung einer externen Energiequelle entlang der Gleitbahn (214) dreht und die Übertragungsstange (211) in Drehung versetzt, und die Übertragungsstange (211) den Generator (23) über die Übertragungskomponente (22) zur Stromerzeugung antreibt;
wobei das Stützelement (3) einen Stützsockel (31) und eine Feder (32) umfasst; zwei Enden der Feder (32) jeweils fest mit einer Oberseite des Stützsockels (31) und einer Unterseite des Arbeitstischs (1) verbunden sind; die Anzahl der Stützelemente (31) eins oder mehr ist.

2. - Schwingungstyp-Stromerzeugungsvorrichtung nach Anspruch 1, wobei das Übertragungskomponente (22) ein Getriebe (221) ist; das Getriebe (221) mit einer Eingangswelle (222) und einer Ausgangswelle (223) versehen ist, die senkrecht zueinander sind; die Ausgangswelle (223) parallel zu der Arbeitsfläche des Arbeitstischs (1) angeordnet ist, und die Ausgangswelle (223) linear mit einer Rotorwelle (231) des Generators (23) verbunden ist.

3. - Schwingungstyp-Stromerzeugungsvorrichtung nach Anspruch 2, wobei eine Rotorwelle (231) des Generators (23) über eine Kupplung (224) linear mit der Ausgangswelle (223) des Getriebes (221) verbunden ist.

4. - Schwingungstyp-Stromerzeugungsvorrichtung nach Anspruch 1, wobei die Flüssigkeit (4) 40-70 % des Volumens der Aufnahmekavität (11) einnimmt.

5. - Schwingungstyp-Stromerzeugungsvorrichtung nach Anspruch 1, wobei eine Mitte einer Oberseite des Arbeitstischs (1) mit einem Mast und Segel (5) versehen ist und der Mast und das Segel (5) über einen Stützrahmen (6) an dem Arbeitstisch (1) befestigt sind.

6. - Schwingungstyp-Stromerzeugungsvorrichtung nach Anspruch 4, wobei der Arbeitstisch (1) eine polygonale Konstruktion aufweist; die Anzahl der Stromerzeugungskomponenten (2) mehrfach und symmetrisch verteilt auf einer Oberseite und den Seitenflächen des Arbeitstischs (1) ist.

7. - Schwingungstyp-Stromerzeugungsvorrichtung nach Anspruch 1, wobei die Stützelemente (3) in einer kreisförmigen Anordnung an der Unterseite des Arbeitstischs (1) angeordnet sind.

8. - Schwingungstyp-Stromerzeugungsvorrichtung nach Anspruch 1, wobei eine Unterseite des Pendels (213) mit einer Rolle (215) versehen ist, die zur Gleitbahn (214) passt, und das Pendel (213) über die Rolle (215) entlang der Gleitbahn (214) gleitet.

## Revendications

1. - Dispositif de production d'énergie de type oscillant, comprenant un bâti (1), des composants de production d'énergie (2) et des composants de support (3) ;
le bâti (1) comporte à l'intérieur une cavité de réception (11), et la cavité de réception (11) contient un liquide (4) destiné à augmenter la fréquence d'oscillation et l'amplitude d'oscillation du bâti (1), et le liquide (4) ne remplit pas la cavité de réception (11) et peut osciller librement à l'intérieur de la cavité de réception (11) ;
le composant de production d'énergie (2) comprend un composant rotatif (21), un composant de transmission (22) et un générateur (23) ; le composant rotatif (21) comprend une tige de transmission (211), une tige de liaison (212), un pendule (213) et une glissière (214) ; la glissière (214) est circulaire, et la tige de transmission (211) est disposée à un centre de la glissière (214) circulaire ; deux extrémités de la tige de liaison (212) sont reliées de manière fixe à la tige de transmission (211) et au pendule (213), respectivement ; le pendule (213) tourne le long de la glissière (214) sous l'action d'une source d'énergie externe et entraîne la tige de transmission (211) en rotation, et la tige de transmission (211) entraîne le générateur (23) pour produire de l'électricité par l'intermédiaire du composant de transmission (22) ;
le composant de support (3) comprend un siège de support (31) et un ressort (32) ; deux extrémités du ressort (32) sont reliées de manière fixe à une partie supérieure du siège de support (31) et à une partie inférieure du bâti (1), respectivement ; le nombre des composants de support (31) est de un ou plus.

2. - Dispositif de production d'énergie de type oscillant selon la revendication 1, dans lequel le composant de transmission (22) est un multiplicateur de vitesse (221) ; le multiplicateur de vitesse (221) comporte un arbre d'entrée (222) et un arbre de sortie (223) qui sont perpendiculaires l'un à l'autre ; l'arbre de sortie (223) est disposé parallèlement à la surface de travail du bâti (1), et l'arbre de sortie (223) est relié de manière linéaire à un arbre de rotor (231) du générateur (23).

3. - Dispositif de production d'énergie de type oscillant selon la revendication 2, dans lequel un arbre de rotor (231) du générateur (23) est relié de manière linéaire à l'arbre de sortie (223) du multiplicateur de vitesse (221) par l'intermédiaire d'un accouplement (224).

4. - Dispositif de production d'énergie de type oscillant selon la revendication 1, dans lequel le liquide (4) occupe 40 à 70 % du volume de la cavité de réception (11).

5. - Dispositif de production d'énergie de type oscillant selon la revendication 1, dans lequel un centre d'une partie supérieure du bâti (1) comporte un mât et voile (5), et le mât et voile (5) sont fixés sur le bâti (1) par l'intermédiaire d'un cadre de support (6).

6. - Dispositif de production d'énergie de type oscillant selon la revendication 4, dans lequel le bâti (1) a une forme polygonale ; le nombre des composants de production d'énergie (2) est multiple et sont répartis de manière symétrique sur une surface supérieure et des surfaces latérales du bâti (1).

7. - Dispositif de production d'énergie de type oscillant selon la revendication 1, dans lequel les composants de support (3) sont disposés en un réseau circulaire à la partie inférieure du bâti (1).

8. - Dispositif de production d'énergie de type oscillant selon la revendication 1, dans lequel une partie inférieure du pendule (213) comporte une poulie (215) mise en correspondance avec la glissière (214), et le pendule (213) coulisse le long de la glissière (214) par l'intermédiaire de la poulie (215).
